# EUROPEAN PATENT APPLICATION

(11) **EP 3 734 525 A1**
(43) Date of publication of application: **04.11.2020**
(21) Application number: 17936637.2
(22) Date of filing: 29.12.2017
(51) Int. Cl.: G06Q 10/08, B67D 1/08, B67D 1/02

(54) **ELECTRONIC DEVICE FOR MULTIPLE CONTROL OF DISPENSERS OF BEER, FIZZY DRINKS AND SIMILAR PRODUCTS**

(71) Applicant: Tubing Food S.L., 08160 Barcelona (ES)
(72) Inventor: SANTAOLALLA MILLA, Carlos, 08160 Barcelona (ES)
(74) Representative: Diaz Nunez, Joaquin
(86) International application number: PCT/ES2017/070870
(87) International publication number: WO 2019/129898

(57) **Abstract**

ELECTRONIC EQUIPMENT FOR THE MULTIPLE CONTROL OF DISPENSERS OF BEER, BEVERAGES AND SIMILAR PRODUCTS, comprising a main module (2), with connection to external power supply (3) and communication router (4) wifi, 3G OR 4G, which manages the sending of data that it receives from the installation (5) which controls an external server and the communication with one or more slave modules (6, 6') from which it receives such data; and at least one slave module (6) connected to the main module (2) connected to flowmeters (8) each inserted in the piping (9) of one or more product dispensers (10) of said installation (5), whose slave module (6) captures, stores and sends the impulse data of each flowmeter (8) to the main module (2). The main module (2) is connected to the slave module (6) by means of a direct non-Ethernet connector (7).

## Description

### OBJECT OF THE INVENTION

The invention, as expressed in the wording of the present descriptive report, refers to electronic equipment for the multiple control of dispensers of beer, beverages and similar products, which provides, for the function for which it is intended, structural and constitutive characteristics, described in detail below, which are a remarkable novelty for the current state of the art.

More particularly, the object of the invention centres on electronic control equipment capable of counting the liters of products served in up to 16 different dispensers of an establishment's installation, as well as the temperatures and working pressures of the installation and the energy consumption of the component thereof that the client needs to know. Said equipment sends data to an external server from which, in turn, it is possible to visualize and consult information of installations of other establishments, as well as all of the above-mentioned data associated therewith.

### FIELD OF APPLICATION OF THE INVENTION

The field of application of the present invention is within the industrial sector dedicated to the manufacture and installation of dispensers of beer, beverages and other similar products, while also covering the field of electronic control equipment.

### BACKGROUND OF THE INVENTION

As a reference to the current state of the art, it should be noted that, at least on the part of the applicant, the existence of any other guidance device for liver surgery, or any other invention of similar application, with the same or similar technical, structural and constitutive characteristics as the one claimed herein, is unknown.

### DESCRIPTION OF THE INVENTION

The electronic equipment for the multiple control of dispensers of beer, beverages and similar products proposed by the invention is therefore a novelty within its field of application, conveniently included in the final claims accompanying this description.

Specifically, what the invention proposes, as noted above, is electronic control equipment that counts the liters served in up to 16 different dispensers of beer, beverages or other products in the installation of an establishment, which, preferably, also measures the temperatures and working pressures of the installation, and which, in addition, optionally also measures the consumption energy of a certain component of the installation that the client/user needs to know, data that is sent by said equipment to an external server from which, in turn, it can be viewed and consulted remotely, for example through a web or computer application, together with the data from installations of other establishments, which may belong to the same client or other clients/users, as well as all the data commented on above, associated to each of said installations, allowing customers/users associated to this service and provided with the equipment implemented in their installations to know at all times the status and consumption level of the products they dispense, without having to do so on site and one by one.

To this end, and more specifically, the equipment essentially comprises the following elements:
- a main module, consisting of a computer unit with the necessary electronic components and an external power supply, which manages, on the one hand, the sending of data received from the installation that controls the external server, for which it is equipped with wifi connectivity, 3g/4g, through a router, and on the other hand, the communication with one or more slave modules from which it receives said data;
- and at least one slave module, connected to the main module, by means of a direct connector, and to each of the flowmeters inserted in the piping of the dispenser taps of each of the different products of the establishment to be controlled, being able to capture, save and send the impulse data of each flowmeter to the main module so that it, in turn, sends said data to the server.

Preferably, for establishments or installations with a large number of product dispensers to be controlled, the equipment comprises two or more slave modules, up to a maximum of four, each with up to four flowmeters and connected to each other in series via Ethernet cable, whose communication is also controlled by the main module, allowing modules to be placed in remote locations, for example under the bar counter.

Preferably, the flowmeters are blade flowmeters.

Preferably, the ID (digital identity) of the slave modules connected by Ethernet cable is configurable and has one or two jumpers to close the electrical circuit, as appropriate in each case.

Optionally, at least one of the slave modules has a probe to measure the ambient temperature.

In addition, the equipment also includes an additional slave module, or extension slave module that connects to a thermocouple probe, giving the possibility of measuring the temperature of the installation's ice bank, which connects to one or more clamp meters, to control the intensity of the electrical current of one of the elements of the installation, e.g. such as an ice bank, and/or connects to one or more pressure sensors incorporated in the product cylinders or tanks.

In any case, each slave module accepts a maximum of four flowmeters connected to it, so that the equipment is able to control up to a maximum of 16 different product dispensers.

Finally, it should be noted that each slave module is equipped, on both sides, with RJ45-type connectors for power supply and communication between modules.

In view of the above, it can be seen that the described electronic equipment for the multiple control of beer, beverages and similar product dispensers represents an innovative structure with structural and constitutive characteristics unknown until now for the purpose for which it is intended, reasons which, together with its practical use, provide it with sufficient basis to obtain the privilege of exclusivity requested.

### DESCRIPTION OF THE DRAWINGS

To complement the description being made and in order to offer a better understanding of the characteristics of the invention, the present descriptive report is accompanied, as an integral part of it, by a set of drawings, in which the following has been represented for illustrative and not restrictive purposes:
Figure number 1.- Shows, in a block diagram, an outline of the representation of the electronic equipment for the multiple control of dispensers of beer, beverages and similar products, which is the subject of the invention, with an appreciation of the main parts and elements it comprises.

And figures number 2, 3 and 4.- Show schematic front elevation views of three examples of implementation of the electronic equipment of the invention for the multiple control of dispensers, in three different types of installation.

### PREFERENTIAL EMBODIMENT OF THE INVENTION

In view of the above-mentioned figures, several non-limitative embodiment examples of the recommended electronic equipment for the multiple control of dispensers can be seen, comprising the parts and elements indicated and described in detail below, in accordance with the numbering adopted, as listed below:
1. equipment
2. main module
3. external power supply
4. router
5. installation
6. slave module 6' extension slave module
7. direct connector
8. flowmeter
9. piping
10. product dispenser
11. Ethernet cable
12. bar counter
13. product tank, 13" cylinders, 13" intermediate tanks
14. conventional temperature probe
15. thermocouple probe
16. ice bank
17. clamp meters
18. pressure probe
19. RJ45 connectors

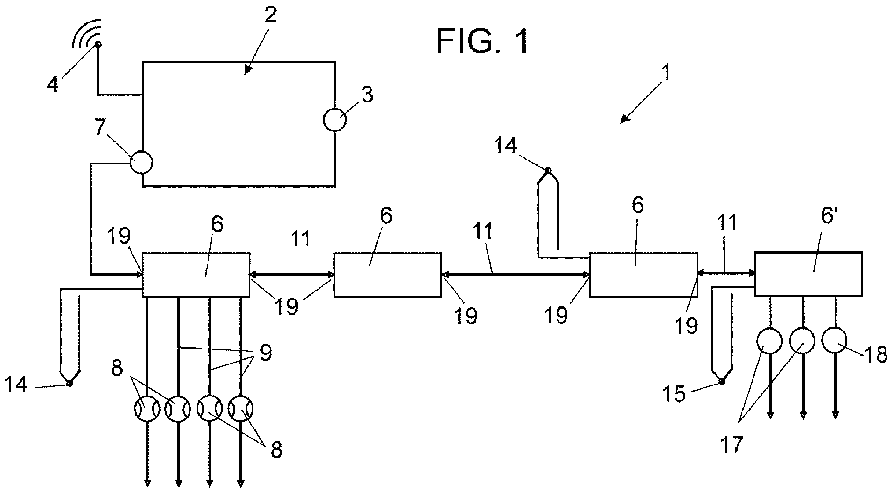

Thus, as can be seen in figure 1, the equipment (1) in question is essentially configured from: a main module (2), equipped with a connection for external power supply (3) and to a wifi communication router (4), 3G or 4G, which manages the sending of data received from the installation (5) which controls an external server and communication with one or more slave modules (6, 6') from which it receives said data; and at least one slave module (6) connected to the main module (2), by means of a non-Ethernet direct connector (7), and connected to flowmeters (8) each inserted in the piping (9) of one or more product dispensers (10) of said installation (5), whose slave module (6) captures, stores and sends the impulse data of each flowmeter (8) to the main module (2).

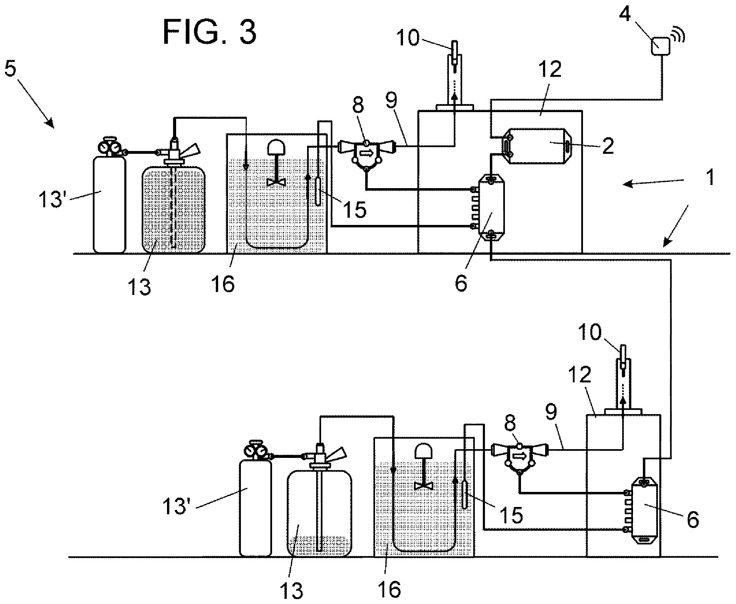

Preferably, the device (1) comprises two or more slave modules (6), up to a maximum of four, each connected with up to four flowmeters (8) and to each other in series via Ethernet cable (11), allowing slave modules (6) to be placed away from each other, for example on different bar counters (12) where the dispensers (10) are installed, as shown in the example in figure 3 below.

In any case, preferably, these flowmeters (8) inserted in the piping (9) of each dispenser (10) between it and the product tank (13), are blade flowmeters.

Preferably, the slave modules (6) connected to each other by Ethernet cable (11) are configurable and have one or two jumpers to close the electrical circuit, according to to the needs of each case.

Optionally, at least one of the slave modules (6) is connected to a conventional temperature probe (14) to measure the ambient temperature and/or to a thermocouple probe (15) to measure the temperature of an ice bank (16) in the installation (5).

And, additionally, the equipment (1) includes an additional slave module, or extension slave module (6') for the control of additional parameters, which, preferably, is connected to a thermocouple probe (15), to measure the temperature of an ice bank (16) of the installation (5), to one or more clamp meters (17), to control the intensity of the electrical current from one of the elements of the installation (5), e.g. the ice bank (16), and/or to one or more pressure probes (18) incorporated in the product tanks (13) and/or gas cylinders (13') of carbon dioxide which is added to the product.

Finally, it should be noted that for power and communication connections with Ethernet cable (11), the slave modules (6, 6') are equipped, on both sides, with RJ45 connectors (19), while the other connections, to flowmeters (8), probes and other elements, are conventional electrical connections.

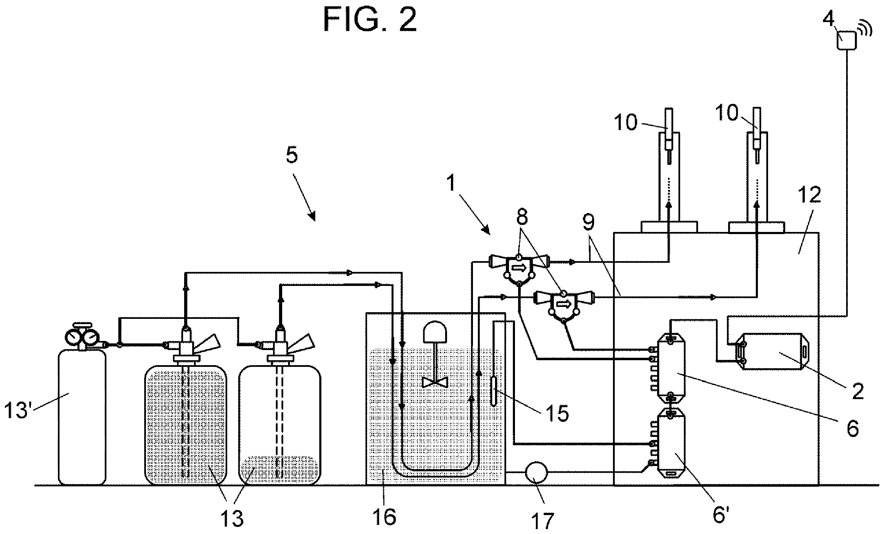

Figure 2 shows an implementation option for the equipment (1) of the invention in an installation (5) with a slave module (6) connected to two flowmeters (8) incorporated in the piping (9) of two dispensers (10), and an extension slave module (6') connected to a thermocouple probe (15) which measures the temperature of the ice bank (16) and to a clamp meter (17) which measures the electrical voltage of the ice bank (16), said modules (6, 6') and the main module (2) being incorporated under the bar counter (12) in which both dispensers (10) are installed.

Figure 3 shows another example of implementation of the equipment (1), in this case in an installation (5) with two dispensers (10) incorporated in separate bar counters (12), specifically located on different floors, in this case with two slave modules (6), one in the bar counter (12) on the upper floor, next to the main module (2), and the other in the bar counter (12) on the lower floor, conveniently connected to each other by the Ethernet cable (11).

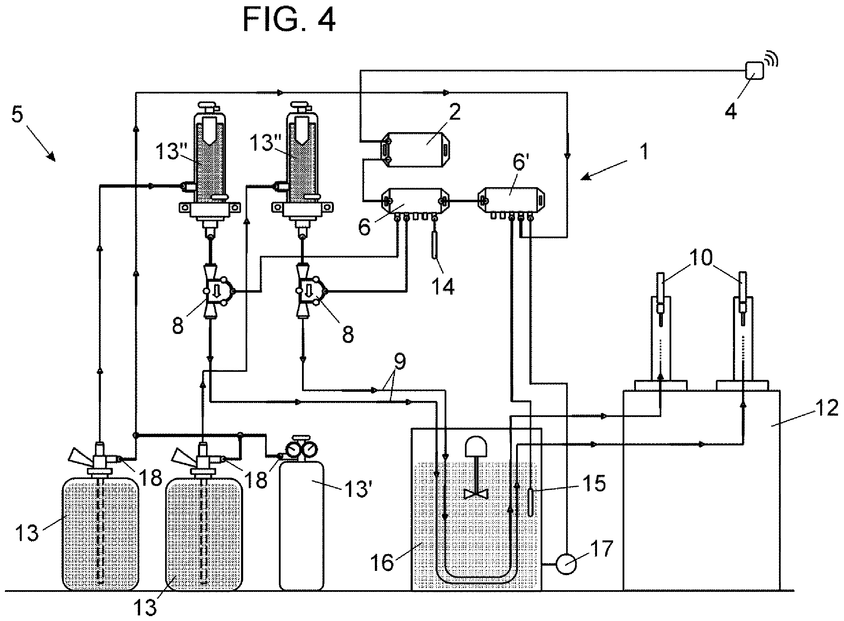

And, in figure 4, another example of implementation of the equipment (1) of the invention is observed, in this case incorporating the main module (2) and the slave (6) and extension modules (6'), instead of in the bar counter (12) where the dispensers are located (10), in the cooling compartment or room where the product passes through intermediate cooling tanks (13").

Finally, it should be noted that the communication router (4) with which the main module (2) is connected should preferably be incorporated somewhere in the establishment close to the outside, since normally in the area where the installation is located the signal coverage is usually poor or directly null.

Having sufficiently described the nature of the present invention, as well as the manner in which it is put into practice, it is not considered necessary to make its explanation more extensive so that any person skilled in the art may understand its scope and the advantages derived from it, it being stated that, within its essentiality, it may be put into practice in other forms of implementation which differ in detail from that indicated by way of example, and which will also achieve the protection being sought, provided that the fundamental principle of the present invention is not altered, changed or modified.

## Claims

1. ELECTRONIC EQUIPMENT FOR THE MULTIPLE CONTROL OF DISPENSERS OF BEER, BEVERAGES AND SIMILAR PRODUCTS, **characterized in that** it comprises a main module (2), with connection to external power supply (3) and communication router (4) wifi, 3G or 4G, which manages the sending of data it receives from the installation (5) which controls an external server and communication with one or more slave modules (6, 6') from which it receives such data; and at least one slave module (6) connected to the main module (2) connected to flowmeters (8) each inserted in the conduction (9) of one or more dispensers (10) of product from that installation (5), which slave module (6) captures, stores and sends the impulse data of each flowmeter (8) to the main module (2).

2. ELECTRONIC EQUIPMENT FOR THE MULTIPLE CONTROL OF DISPENSERS OF BEER, BEVERAGES AND SIMILAR PRODUCTS, according to claim 1, **characterized in that** the main module (2) is connected to the slave module (6) by means of a direct non-Ethernet connector (7).

3. ELECTRONIC EQUIPMENT FOR THE MULTIPLE CONTROL OF DISPENSERS OF BEER, BEVERAGES AND SIMILAR PRODUCTS, according to claim 1 or 2, **characterized in that** it comprises two or more slave modules (6) each connected with up to four flowmeters (8).

4. ELECTRONIC EQUIPMENT FOR THE MULTIPLE CONTROL OF DISPENSERS OF BEER, BEVERAGES AND SIMILAR PRODUCTS, according to any of the claims 1 to 3, **characterized in that** it comprises up to four slave modules (6).

5. ELECTRONIC EQUIPMENT FOR THE MULTIPLE CONTROL OF DISPENSERS OF BEER, BEVERAGES AND SIMILAR PRODUCTS, according to the claims 3 or 4, **characterized in that** the slave modules (6) are connected in series via Ethernet cable (11), allowing slave modules (6) to be placed in locations away from each other.

6. ELECTRONIC EQUIPMENT FOR THE MULTIPLE CONTROL OF DISPENSERS OF BEER, BEVERAGES AND SIMILAR PRODUCTS, according to any of the claims 3 to 5, **characterized in that** the slave modules (6) are configurable and have jumpers to close the electrical circuit, according to the needs of each case.

7. ELECTRONIC EQUIPMENT FOR THE MULTIPLE CONTROL OF DISPENSERS OF BEER, BEVERAGES AND SIMILAR PRODUCTS, according to any of the claims 1 to 6, **characterized in that** the flowmeters (8) are blade flowmeters.

8. ELECTRONIC EQUIPMENT FOR THE MULTIPLE CONTROL OF DISPENSERS OF BEER, BEVERAGES AND SIMILAR PRODUCTS, according to any of the claims 1 to 7, **characterized in that** at least one of the slave modules (6) is connected to a temperature probe (14) to measure the ambient temperature and/or to a thermocouple probe (15) to measure the temperature of an ice bank (16) of the installation (5).

9. ELECTRONIC EQUIPMENT FOR THE MULTIPLE CONTROL OF DISPENSERS OF BEER, BEVERAGES AND SIMILAR PRODUCTS, according to any of the claims 1 to 8, **characterized in that** it includes an extension slave module (6') for the control of additional parameters.

10. ELECTRONIC EQUIPMENT FOR THE MULTIPLE CONTROL OF DISPENSERS OF BEER, BEVERAGES AND SIMILAR PRODUCTS, according to claim 9, **characterized in that** the extension slave module (6') is connected to a thermocouple probe (15), to measure the temperature of an ice bank (16) of the installation (5).

11. ELECTRONIC EQUIPMENT FOR THE MULTIPLE CONTROL OF DISPENSERS OF BEER, BEVERAGES AND SIMILAR PRODUCTS, according to claim 9 or 10, **characterized in that** the extension slave module (6') is connected to one or more clamp meters (17), to control the intensity of the electrical current of elements of the installation (5), e.g. the ice bank (16).

12. ELECTRONIC EQUIPMENT FOR THE MULTIPLE CONTROL OF DISPENSERS OF BEER, BEVERAGES AND SIMILAR PRODUCTS, according to any of the claims 9 to 11, **characterized in that** the extension slave module (6') is connected to pressure probes (18) incorporated in the product tanks (13) and/or gas cylinders (13').
